Europäisches Patentamt

European Patent Office

Office européen des brevets

(19)

(11) **EP 1 398 358 B1**

(12) **EUROPEAN PATENT SPECIFICATION**

(45) Date of publication and mention
of the grant of the patent:
**15.02.2006 Bulletin 2006/07**

(51) Int Cl.:
*C09D 127/18* (2006.01)   *C09D 5/03* (2006.01)
*B32B 15/08* (2006.01)   *C08F 214/18* (2006.01)
*C08F 214/26* (2006.01)

(21) Application number: **02738753.9**

(22) Date of filing: **18.06.2002**

(86) International application number:
**PCT/JP2002/006074**

(87) International publication number:
**WO 2003/006566 (23.01.2003 Gazette 2003/04)**

(54) **Use of a powder coating material**

Verwendung von Pulverlack

Utilisation d'un matériau de revêtement en poudre

(84) Designated Contracting States:
**AT BE CH CY DE DK ES FI FR GB GR IE IT LI LU
MC NL PT SE TR**

(30) Priority: **18.06.2001 JP 2001183917**

(43) Date of publication of application:
**17.03.2004 Bulletin 2004/12**

(73) Proprietor: **DAIKIN INDUSTRIES, LTD.**
**Osaka-shi, Osaka 530-8323 (JP)**

(72) Inventors:
 • **MIYATANI, Toshio,**
**DAIKIN INDUSTRIES, LTD.**
**Settsu-shi, Osaka 566-8585 (JP)**
 • **TOMIHASHI, Nobuyuki,**
**DAIKIN INDUSTRIES, LTD.**
**Settsu-shi, Osaka 566-8585 (JP)**

 • **TORII, Hiroshi,**
**DAIKIN INDUSTRIES, LTD.**
**Settsu-shi, Osaka 566-8 (JP)**
 • **OGITA, Koichiro,**
**DAIKIN INDUSTRIES, LTD.**
**Settsu-shi, Osaka 566-8 (JP)**

(74) Representative: **Goddar, Heinz J.**
**FORRESTER & BOEHMERT**
**Pettenkoferstrasse 20-22**
**80336 München (DE)**

(56) References cited:
**EP-A- 1 262 496        WO-A-02/04560**
**WO-A1-00/58414        WO-A1-99/07552**
**US-A- 4 262 101        US-A- 4 395 445**
**US-A- 4 546 141        US-A- 4 914 158**
**US-A- 5 547 761**

**Description**

TECHNICAL FIELD

The present invention relates to the use of a powder coating which can give coats excellent in surface smoothness and in durability against chemicals and so forth.

BACKGROUND ART

Piping materials such as tubes, pipes and valves, which come into contact with chemicals or the like when they are used, are desirably provided with a corrosion-resistant lining so that they may be resistant to the chemicals or the like. Preferably used as the corrosion-resistant lining materials are fluororesins since they are highly resistant to acids, alkalis, oxidizing or reducing agents, various solvents and like chemicals.

Fluororesins have nonstickiness in addition to corrosion resistance and can chemically prevent the adhesion of fouling substances to the surface of corrosion-resistant linings, thus contributing to providing antifouling properties. However, in recent years, corrosion-resistant lining materials having higher in antifouling effect have been demanded in particular for piping materials in semiconductor manufacturing equipment, for instance. A known method of improving the antifouling properties of corrosion-resistant linings using a fluororesin comprises improving the surface smoothness of the corrosion-resistant linings to thereby physically prevent the adhesion of fouling substances.

When used as corrosion-resistant lining materials, fluororesins are judiciously used as powder coatings since the latter can be applied to various forms of articles to be lined therewith in amounts sufficient to show corrosion resistance, cause only small amounts of waste in the application process, and are easy to handle. The fluororesins heretofore in use as powder coatings for corrosion-resistant lining materials are in many cases tetrafluoroethylene-hexafluoropropylene copolymers (FEPs).

For improving the surface smoothness of corrosion-resistant linings obtained by using a FEP-containing powder coating in which the FEPs are used as the base resin, it is generally sufficient to prolong the time of heating for baking of the coat obtained by applying the powder coating. However, thereby a prolonged time of an overall application process tends to cause problems, namely wastes of time and energy as well as thermal degradation of the FEPs.

Thick corrosion-resistant linings are the mainstream in the art for attaining sufficient levels of corrosion resistance. In recent years, in particular, the rotolining technique has become popular as a method of applying corrosion-resistant lining materials and, accordingly, thickening the lining is in current tendency. In the case of thick linings, the resin therein tends to undergo stress cracking by nature and, when such linings come into contact with chemicals, the internal stress increases to facilitate cracking. The occurrence of cracking causes decreases in corrosion resistance, hence is undesirable.

For attaining the surface smoothness of the corrosion-resistant linings obtained by using a FEP-containing powder coating without prolonging the time of application process, attempts have been made to reduce the molecular weight of the FEP. However, the reduction in molecular weight of FEP produces problems: cracking in the corrosion-resistant linings may readily occur and, in particular, the occurrence of cracking in the thick corrosion-resistant linings obtained by the rotolining technique, among others, becomes remarkable.

The rotolining technique comprises placing a powder coating on a part on the inside wall of a piping material, which is the article to be lined, and heating the pipe to a temperature not lower than the melting point of the resin while rotating the pipe around the axial line passing through the center of the diameter of the pipe and extending under its own weight in the direction along the pipe, to thereby apply the powder coating onto the whole inside wall. Therefore, the powder coating to be used for the rotolining technique is required to have a certain level of flowability (smoothness) for facilitating the even application and processing thereof.

However, none of the prior art FEP-based powder coatings is excellent in both flowability and cracking resistance and can adequately be used to give corrosion-resistant linings and it has been demanded that a powder coating suited for the rotolining technique, in particular, is developed.

SUMMARY OF THE INVENTION

In view of the current state of the art discussed above, an object of the present invention is the use of a powder coating which is excellent in processability to attain the desired coat surface smoothness and can give coats excellent in chemical resistance and free from cracking due to chemicals or temperature shocks.

The powder coating contains a tetrafluoroethylene-based copolymer
wherein the tetrafluoroethylene-based copolymer is a copolymer of 5 to 25% by mass of hexafluoropropylene, 0.01 to 5% by mass of perfluoro(vinyl ether) and tetrafluoroethylene and
wherein said tetrafluoroethylene-based copolymer has a melt flow rate of 1 to 30 g/10 minutes.

The above-mentioned powder coating preferably has an average particle size of 5 to 500 μm and an apparent density of 0.4 to 1.2 g/ml.

The above-mentioned powder coating preferably further contains 0.001 to 5 parts by mass of a heat stabilizer per 100 parts by mass of the tetrafluoroethylene-based copolymer.

The above-mentioned heat stabilizer preferably comprises an amine-based antioxidant and/or a sulfur-containing organic compound.

The above-mentioned powder coating is preferably one which is to be used in rotolining, and in which the tetrafluoroethylene-based copolymer has a melt flow rate of 5 to 30 g/10 minutes.

The present invention is a corrosion-resistant lining obtainable by applying the above-mentioned powder coating.

DETAILED DISCLOSURE OF THE INVENTION

In the following, the present invention is described in detail.

The application process of the powder coating according to the present invention comprises applying one to a material to be coated and heating for baking the applied one for coat formation. The coat obtained by such application process can be used as a corrosion-resistant lining, among others, in various fields of applications.

The powder coating can be applied by rotolining, to attain thin coats from 50 to 200 μm in thickness after baking or thick coats exceeding 200 μm but not exceeding 10,000 μm in thickness after baking.

The powder coating, when adjusted in average particle size, melt flow rate and so on as aftermentioned, can be rendered suited to the coating method such as mentioned above and for attaining the coat thickness after baking as mentioned above.

The "coat thickness after baking" means the coat thickness obtained in case that the repetitive number of an application procedure is one or in case that the repetitive number of an application procedure is two or more. The latter case is when an application procedure is repeated twice or more. The repetitive number of an application procedure is counted as one when the application procedure comprises coating of the powder coating according to the present invention onto a material to be coated and subsequent heating for baking thereof for coat formation. In the present specification, two or more of such application procedures are sometimes referred to as "repetitive coating method".

The powder coating contains a tetrafluoroethylene (hereinafter referred to as "TFE")-based copolymer.

In the present specification, the above-mentioned "TFE-based copolymer" means a copolymer having a copolymer composition comprising TFE as the main constituent. In the present specification, the "copolymer composition" means both the monomer unit species which are fundamental units of the chemical structure of the above-mentioned TFE-based copolymer and the proportion of each monomer unit being expressed in terms of amount (% by mass) in the above-mentioned TFE-based copolymer.

The TFE-based copolymer to be contained in the powder coating is a copolymer of 5 to 25% by mass of hexafluoropropylene (hereinafter referred to as "HFP"), 0.01 to 5% by mass of perfluoro(vinyl ether) (hereinafter referred to as "PFVE"), and tetrafluoroethylene.

The powder coating comprises, as the base resin, a TFE-based copolymer having the above-mentioned copolymer composition and, accordingly, can give coats excellent in both surface smoothness and chemical resistance. The above-mentioned PFVE is not particularly restricted but is preferably a perfluoro(alkyl vinyl ether), more preferably perfluoro(propyl vinyl ether).

The amount of HFP is 5 to 25% by mass. If the amount of HFP is less than 5% by mass, the above-mentioned TFE-based copolymer has a high melting point and a high level of crystallinity, hence the stress cracking resistance thereof will decrease and, in addition, when the melt flow rate of the above-mentioned TFE-based copolymer is increased, a remarkable decrease in chemical resistance will result. For improving the stress cracking resistance, it is conceivable to increase the molecular weight of the above-mentioned TFE-based copolymer. However, this results in an increase in melt viscosity as well, hence the processibility deteriorates and no more uniform coats are unobtainable, with the result that the corrosion resistance decreases. When the HFP content is above 25% by mass, the rate of copolymerization lowers, leading to poor productivity, and the above-mentioned TFE-based copolymer will have a melting point lower than about 250°C, which is the ordinary heating temperature in the application procedure, and heat resistance of the coats obtained will lower. When a higher level of nonstickiness is required while a low melting point is allowable, it is recommended that the proportion of HFP in the copolymer composition is increased within the above-mentioned range. A preferred lower limit to the proportion of HFP is 11% by mass, and a preferred upper limit is 16% by mass.

The proportion of the above-mentioned PFVE is 0.01 to 5% by mass. When the PFVE content is less than 0.01%, the surface smoothness and chemical resistance of the resulting coats will not be improved to a satisfactory extent. When it exceeds 5% by mass, any effects to be improved in proportion to the increase in content will not be produced and this is unfavorable from the economical viewpoint. A preferred lower limit to the PFVE content level is 0.05% by mass, and a preferred upper limit is 2% by mass.

The above-mentioned TFE-based copolymer has a melt flow rate (MFR) of 1 to 30 g/10 minutes. When the MFR is less than 1 g/10 minutes, a long period of heating is required for attaining the desired surface smoothness of the coats, so that deterioration of the above-mentioned TFE-based copolymer is possibly occurred as a problem. When it exceeds 30 g/10 minutes, the coats obtained tend to undergo cracking due to thermal strain, which leads to a deterioration in corrosion resistance.

The above-mentioned melt flow rate indicates the flowability when the TFE-based copolymer is melted. The above-mentioned melt flow rate can be determined according to the repetitive number of application procedures of the powder coating while taking into consideration of the surface smoothness of the resulting coats, among others. When a small repetitive number of application procedures of the powder coating is allowed, it is advantageous that a relatively high MFR value is selected within the above-mentioned range.

Thus, when the powder coating obtained is to be used in application of which repetitive number of the application procedure is not less than one and less than three, which is the case of producing thin coats or by rotolining, for example, the melt flow rate is preferably 5 to 30 g/10 minutes. When the powder coating obtained is to be used in an application of which repetitive number of the application procedure is three to ten, which is the case of producing thick coats or electrostatic coating, for instance, the melt flow rate is preferably within the range of 1 to 5 g/10 minutes.

The TFE-based copolymer can have the melt flow rate within the above-mentioned range by adjusting the copolymer composition and molecular weight.

In the present specification, the melt flow rate is the value measured at a temperature of 372°C under a load of 5 kg according to ASTM D 2116.

The method of producing the above-mentioned TFE-based copolymer is not particularly restricted. For example, the copolymer can be obtained by copolymerization using such a method of polymerization known in the art as emulsion polymerization or suspension copolymerization.

Preferably, the powder coating further contains a heat stabilizer. When the powder coating contains a heat stabilizer, it is possible to prevent the discoloration or foaming of the coats as otherwise possibly resulting from destabilization of the above-mentioned TFE-based copolymer upon heating at a temperature not lower than about its melting point.

For preventing the above-mentioned TFE-based copolymer from being oxidized, an amine-based antioxidant and/or a sulfur-containing organic compound are/is preferred as the above-mentioned heat stabilizer.

The amine-based antioxidant includes, among others, aromatic amines having one or more aromatic hydrocarbon groups, e.g. phenyl, naphthyl, more specifically phenylenediamine-based compounds such as N,N'-diphenyl-p-phenylenediamine, N, N' -di-2-naphthyl-p-phenylenediamine, and reaction products from diphenylamine and diisobutylene; and other secondary aromatic amine compounds such as dinaphthylamine, phenyl-$\alpha$-naphthylamine, phenyl-$\beta$-naphthylamine, 4,4'-bis($\alpha,\alpha$'-dimethylbenzyl)diphenylamine, phenyl-cyclohexyl-p-phenylenediamine, and styrenated diphenylamine, among others.

The sulfur-containing organic compound includes, among others, mercaptobenzimidazole-based compounds such as 2-mercaptobenzimidazole and 2-mercaptomethylbenzimidazole; mercaptobenzothiazole-based compounds such as 2-mercaptobenzothiazole, 2-mercaptobenzothiazole cyclohexylamine salt, dibenzothiazyl disulfide, 2-(4'-morpholinodithio)benzothiazole, N-cyclohexyl-2-benzothiazolylsulfenamide, N-oxydiethylene-2-benzothiazolylsulfenamide, and N-tert-butyl-2-benzothiazolylsulfenamide; mercaptoimidazoline-based compounds such as 2-mercaptoimidazoline; and dithiocarbamic acids such as pentamethylenedithiocarbamic acid, pipecolyldithiocarbamic acid, dimethyldithiocarbamic acid, diethyldithiocarbamic acid, dibutyldithiocarbamic acid, and N-ethyl-N-phenyldithiocarbamic acid. These may be in the form of salts with a metal such as Zn, Sn, Cd, Cu or Fe; or in the form of organic salts such as piperidine salts or pipecolyl salts.

The sulfur-containing organic compound further includes thiuram-based compounds, more specifically thiuram monosulfides such as tetramethylthiuram monosulfide; thiuram disulfides such as tetramethylthiuram disulfide, tetraethylthiuram disulfide, and tetrabutylthiuram disulfide; and other thiuram-based compounds such as dipentamethylenethiuram tetrasulfide, among others.

The sulfur-containing organic compound may also be a thiourea derivative such as N,N'-diethylthiourea, dibutylthiourea, or dilaurylthiourea, or the like.

Among the heat stabilizers mentioned hereinabove, aromatic ring-containing compounds are preferred and aromatic amines, mercaptobenzothiazole-based compounds and mercaptobenzimidazole-based compounds are more preferred since stability is required at high temperatures generally not below the melting point of the TFE-based copolymer contained in the powder coating according to the present invention, for example about 250°C or higher. In cases that the powder coating according to the present invention is used in the fields of application where metal ion elution is undesirable, for example in chemical or medical tools or instruments and semiconductor production equipment, those metal-free compounds which will leave no residue are preferred.

The above-mentioned heat stabilizer may be produced by the methods known in the art. Generally, however, commercially available products can be used.

The above-mentioned heat stabilizer preferably amounts to 0.001 to 5 parts by mass per 100 parts by mass of the above-mentioned TFE-based copolymer. When the addition level is less than 0.001 parts by mass, the heat stability of the above-mentioned TFE-based copolymer may deteriorate in some cases. When it is above 5 parts by mass, the resulting coats may unfavorably cause discoloring or foaming due to decomposition of the above-mentioned heat stabilizer. A more preferred addition level is 0.003 to 2 parts by mass.

Where necessary, the powder coating may further contain an additive in combination with the TFE-based copolymer and the heat stabilizer optionally employed. The above-mentioned additive is not particularly restricted but includes, for example, those generally used in ordinary powder coatings.

As the above-mentioned additive, there may be mentioned color pigments for the purpose of coloration, such as titanium oxide and cobalt oxide; rust preventive pigments, calcining pigments and other pigments for the purpose of rust prevention; carbon fibers, glass fibers, glass flakes, mica and other coat reinforcing materials for the purpose of preventing coat shrinkage; electric conductivity providing materials for the purpose of providing electric conductivity, for example conductive carbon and, further, leveling agents, antistatic agents, and so on.

The powder coating preferably has an average particle diameter of 5 to 500 $\mu$m. When this is less than 5 $\mu$m, electrostatic repulsion may readily occur in coating and thick coat formation tends to become difficult. When it exceeds 500 $\mu$m, the coats obtained by rotolining, among others, may deteriorate in surface smoothness in some instances.

A more preferred range of the average particle size of the powder coating may be determined according to the intended coat thickness value after baking, if necessary using repetitive coating method. In case of producing thin coats as mentioned above, the range of 10 to 40 $\mu$m is more preferred and, in the case producing thick coats as mentioned above, the range of 40 to 70 $\mu$m is more preferred. Further, the average particle diameter of the powder coating may be selected within a more preferred range determined according to the method of application. In case of electrostatic coating, the range of 20 to 70 $\mu$m is more preferred and, in the case of rotolining, the range of 150 to 350 $\mu$m is more preferred.

When conditions of grinding and/or particle-size classification are adjusted in the process of preparing the powder coating, which is mentioned later herein, the above-mentioned average particle diameter of the powder coating can fall within the range mentioned above. In the present specification, the above-mentioned average particle diameter is the value obtained by using a laser diffraction type particle size distribution analyzer.

The powder coating preferably has an apparent density of 0.4 to 1.2 g/ml. When this density is less than 0.4 g/ml, foaming may occur in the application and/or an increased repetitive number of application procedures may be required, and electrostatic coating may become difficult in some instances, and it is not easy, from the industrial viewpoint, to produce a powder coating having an apparent density above 1.2 g/ml. The range of 0.5 to 1.2 g/ml is more preferred. In the present specification, the apparent density (g/ml) is the value obtained by carrying out the measurement according to JIS K 6891.

The method of producing the powder coating is not particularly restricted but includes those methods known in the art, for example the grinding method, granulating method and spray drying method. More specifically, there may be mentioned, for example, the method which comprises, as disclosed in Japanese Kokai Publication Sho-63-270740, compressing the above-mentioned TFE-based copolymer with a roll to a sheet-like form, grinding the same in a grinding machine and classifying the ground size, followed by dry mixing the obtained powder with the above-mentioned stabilizer, if necessary together with additives, e.g. pigment, conductivity providing agent.

The method of producing the powder coating may also comprise preliminarily mixing up the above-mentioned TFE-based copolymer and the above-mentioned stabilizer, if necessary together with the above-mentioned optional additives, in a mixer, melting and kneading the resulting mixture in a kneader or melt extruder, and grinding the resulting mixture, if necessary followed by particle-size classification.

The thus-obtained powder coating is generally subjected to an application process by being applied to a material to be coated and then heated for baking to give a coat.

The material to be coated is not particularly restricted but includes, as those to be judiciously used, materials which are required to be provided with corrosion resistance. As such material to be coated, there may be mentioned, for example, tanks, vessels, columns, valves, pumps, joints, other piping materials, parts, sealing materials, and like articles which are to be provided with a corrosion-resistant lining.

Further, when the powder coating contains such an electric conductivity providing agent as mentioned above, for instance, the material to be coated includes those to be desirably provided with electric characteristics, such as tanks, vessels, columns, stirring blades, and other antistatic tools or instruments, which may be used with an organic solvent(s).

The material to be coated may be ones subjected to surface treatment such as washing and sand blasting or to primer coating.

The method of coating the powder coating according to the present invention is the rotolining method. The powder coating according to the present invention can be adequately applied by the rotolining method since this method can give coats excellent in surface smoothness and chemical resistance even in the case of producing thick coats.

The powder coating may be applied in a plurality of divided portions to attain a desired coat thickness according to the intended use. The coat thickness after baking, if necessary using repetitive coating method, is, for example, 20 to 10,000 $\mu$m. For providing corrosion resistance, such as in the case of corrosion-resistant linings, the thickness is preferably 300 to 10, 000 $\mu$m, and it is generally 1, 000 to 10, 000 $\mu$m in the case of rotolining method.

The temperature of heating for baking is, for example, 300 to 400°C.

Owing to the above-mentioned specific copolymer composition, the powder coating according to the present invention has such good processability that coat surface smoothness can be secured. In addition, it can give coats excellent in chemical resistance and further free from cracking due to chemicals or temperature shocks. Such advantageous effects can fully be attained even when thick coats are produced and, in particular even when the intended purpose is to provide corrosion resistance, the effects are remarkable.

Therefore, the powder coating and the coats obtained by applying the powder coating can judiciously be used for providing semiconductor production apparatus or equipment and the like with corrosion-resistant linings, or rendering chemical or medical tools or equipment resistant to corrosion, for instance.

The corrosion-resistant linings obtainable by applying the above-mentioned powder coating also constitute an aspect of the present invention.

BEST MODES FOR CARRYING OUT THE INVENTION

The following examples illustrate the present invention in more detail. These examples are, however, by no means limitative of the scope of the present invention.

Example 1

(Powder coating production)

A TFE-based copolymer (whose melt flow rate at 372°C was 7 g/10 minutes) with a copolymer composition comprising 88% by mass of TFE, 11% by mass of HFP and 1% by mass of perfluoro (propyl vinyl ether) was compressed by means of a roller compactor to give a sheet. The sheet was disintegrated into a size in the order of several millimeters, followed by grinding in a hammer mill to give a copolymer powder with an average particle size of 220 $\mu$m and an apparent density of 0.85 g/ml. This was supplemented with 0.01 part by mass, per 100 parts by mass of the copolymer powder, of N,N'-di-2-naphthyl-p-phenylenediamine as a heat stabilizer. The resulting mixture was mixed up in a Henschel mixer to give a heat stabilizer -containing powder coating. The melt flow rate of the above -mentioned FEP-based copolymer was the value obtained by carrying out the measurement at a temperature of 372°C under a load of 5 kg according to ASTM D 2116. In the subsequent working Examples and Comparative Examples, the MFR values were determined by the same method of measurement.

(Application process)

An iron pipe having an inside diameter of 100 mm ø and a length of 300 mm was subjected to blasting on the inside surface, then closed at one end thereof with a flange, the pipe thus obtained was charged with 1, 000 g of the powder coating prepared as described above, the other end of the pipe was closed with a flange having a vent hole and, with uniaxial rotation at a speed of 15 rpm, the pipe was placed in an oven in an atmosphere of 360°C for 90 minutes, whereby a lining coat about 2 mm in thickness was obtained.

(Evaluations)

The coat obtained as described above and then peeled off was subjected to the following tests. The results are shown in Table 2.

1. Surface smoothness

The surface of the coat that had once been on the pipe inside surface was evaluated by visual observation according to the following criteria:

◎     Smooth and glossy, very good.
○     Good.
Δ     Good, though much undulated.
✕     Much undulated, and rough.

2. Chemical resistance test

A piece (length 100 mm x width 30 mm x thickness 2 mm) of the coat peeled off was immersed in acetic acid (50% by mass), chloroform or toluene, each warmed to 80°C, for 7 days. The piece of the coat was measured for changes in tensile strength and in weight. The change in tensile strength of the coat was determined by carrying out the tensile test according to JIS K 6888 and the following calculation:

```
(Tensile strength after immersion)/(tensile strength before
immersion) = Change in tensile strength.
```

Examples 2 to 5

Powder coatings were prepared, and lining coats were produced and evaluated in the same manner as in Example 1 except that the FEP-based copolymers and heat stabilizers specified in Table 1 were used and that the powder coatings obtained had the respective average particle diameters and apparent densities shown in Table 1, and the baking was conducted at the respective temperatures given in Table 1.

Comparative Examples 1 to 3

Powder coatings were prepared and lining coats were produced and evaluated in the same manner as in Example 1 except that the FEP-based copolymers and heat stabilizers specified in Table 1 were used and that the powder coatings obtained had the respective average particle diameters and apparent densities shown in Table 1.

Example 6

(Powder coating production)

A TFE-based copolymer (whose melt flow rate at 372°C was 2 g/10 minutes) with a copolymer composition comprising 88% by mass of TFE, 11% by mass of HFP and 1% by mass of perfluoro (propyl vinyl ether) was compressed by means of a roller compactor to give a sheet. The sheet was disintegrated into a size in the order of several millimeters, followed by grinding in a hammer mill to give a copolymer powder with an average particle size of 45 $\mu$m and an apparent density of 0.50 g/ml. This was supplemented with 1.5 parts by mass, per 100 parts by mass of the copolymer powder, of N,N'-di-2-naphthyl-p-phenylenediamine as a heat stabilizer. The resulting mixture was mixed up in a Henschel mixer to give a heat stabilizer-containing powder coating.

(Application process)

An iron sheet (length 100 mm x width 300 mm x thickness 5 mm) was blasted on one side, and the powder coating obtained as described above was applied to the blasted surface using an ONODA electrostatic coating machine while applying a voltage of 70 kV. The resulting coat was baked at 340°C for 30 minutes. This electrostatic coating and baking procedure was repeated 5 times to give a somewhat undulate but smooth coat with a coat thickness of 500 $\mu$m.
The coat obtained as described above was evaluated for surface smoothness in the same manner as in Example 1.

Table 1

| | FEP-based copolymer | | | | Heat stabilizer | | Powder coating | | Baking conditions | |
|---|---|---|---|---|---|---|---|---|---|---|
| | Copolymer composition (% by mass) | | | MFR (g/10min) | Species | Amount* | Particle diameter (μm) | Apparent density (g/ml) | Temperature (°C) | Time (hr) |
| | TFE | HFP | PFVE | | | | | | | |
| Example 1 | 88 | 11 | 1 | 7 | A | 0.01 | 220 | 0.85 | 360 | 90 |
| Example 2 | 86.5 | 13 | 0.5 | 10 | B | 0.1 | 190 | 0.88 | 340 | 90 |
| Example 3 | 88 | 11.5 | 0.5 | 15 | C | 0.1 | 205 | 0.85 | 360 | 90 |
| Example 4 | 85.8 | 14 | 0.2 | 9 | A | 0.05 | 200 | 0.88 | 340 | 90 |
| Example 5 | 84.9 | 15 | 0.1 | 20 | B | 0.1 | 190 | 0.87 | 340 | 90 |
| Example 6 | 88 | 11 | 1 | 2 | A | 1.5 | 45 | 0.50 | 340 | 30 |
| Comparative Example 1 | 87 | 13 | - | 15 | A | 0.05 | 200 | 0.86 | 360 | 90 |
| Comparative Example 2 | 88 | 11 | 1 | 50 | A | 0.1 | 190 | 0.85 | 360 | 90 |
| Comparative Example 3 | 88 | 11 | 1 | 0.5 | A | 0.1 | 200 | 0.85 | 360 | 90 |

*Part(s) by mass per 100 parts by mass of the FEP-based copolymer.

As for the stabilizer species shown in Table 1, A stands for N,N'-di-2-naphthyl-p-phenylenediamine, B for 2-mercaptobenzothiazole, and C for 2-mercaptobenzimidazole.

Table 2

| | Surface smoothness | Chemical resistance (80°C × 7 days) | | | | | |
| | | Acetic acid(50%) | | Chloroform | | Toluene | |
| | | Change in weight(%) | Change in strength(%) | Change in weight(%) | Change in tensile strength(%) | Change in weight(%) | Change in tensile strength(%) |
|---|---|---|---|---|---|---|---|
| Example 1 | ◎ | 0.0 | 100.0 | 1.5 | 98.0 | 0.5 | 100.0 |
| Example 2 | ◎ | 0.3 | 98.0 | 2.0 | 95.0 | 0.4 | 100.0 |
| Example 3 | ○ | 0.0 | 100.0 | 0.9 | 100.0 | 0.2 | 100.0 |
| Example 4 | ◎ | 0.2 | 99.0 | 1.5 | 98.0 | 0.6 | 99.0 |
| Example 5 | ◎ | 0.3 | 98.0 | 2.0 | 95.0 | 0.4 | 98.0 |
| Example 6 | ○ | - | - | - | - | - | - |
| Comparative Example 1 | ◎ | 0.2 | 92.0 | 2.0 | 90.0 | 0.5 | 98.0 |
| Comparative Example 2 | ◎ | 1.0 | 75.0 | 3.5 | 70.0 | 1.0 | 93.0 |
| Comparative Example 3 | × | 0.0 | 100.0 | 0.8 | 100.0 | 0.3 | 100.0 |

From Table 2, it was revealed that the surface smoothness and/or chemical resistance was poor in Comparative Example 1 in which PFVE was not contained in the copolymer composition and in Comparative Examples 2 and 3 in which the MFR of the FEP-based copolymer was outside the range specified herein, while both the surface smoothness and chemical resistance were secured in Examples 1 to 6 in which the copolymer composition and MFR were within the respective ranges specified herein.

INDUSTRIAL APPLICABILITY

The powder coating which has the above-described constitution, has such good processability that coat surface smoothness can be secured. In addition, it can give coats excellent in chemical resistance and further free from cracking due to chemicals or temperature shocks. Such effects of the present invention are remarkable even in the case of producing thick coats.

**Claims**

1. Use of a powder coating containing a tetrafluoroethylene-based copolymer in rotolining, wherein said tetrafluoroethylene-based copolymer is a copolymer of 5 to 25% by mass of hexafluoropropylene, 0.01 to 5% by mass of perfluoro(vinyl ether), and tetrafluoroethylene and has a melt flow rate of 1 to 30 g/10 minutes.

2. Use according to claim 1, wherein the powder coating has an average particle diameter of 5 to 500 μm and an apparent density of 0.4 to 1.2 g/ml.

3. Use according to claim 1 or 2, wherein the powder coating further contains 0.001 to 5 parts by mass of a heat stabilizer per 100 parts by mass of the tetrafluoroethylene-based copolymer.

4. Use according to claims 3, wherein the heat stabilizer comprises an amine-based antioxidant and/or a sulfur-containing organic compound.

5. Use according to any of the preceding claims, wherein the tetrafluoroethylene-based copolymer has a melt flow rate of 5 to 30 g/10 minutes.

6. Corrosion-resistant lining, obtainable by the use according to any of the claims 1 to 5.

**Patentansprüche**

1. Verwendung einer Pulverbeschichtung, die ein Copolymer auf Tetrafluorethylen-Basis enthält, beim Rotolining, wobei besagtes Copolymer auf Tetrafluorethylen-Basis ein Copolymer aus 5 bis 25 Masse% Hexafluorpropylen, 0,01 bis 5 Masse% Perfluor(vinylether) und Tetrafluorethylen ist und einen Schmelzindex von 1 bis 30 g/10 Minuten besitzt.

2. Verwendung nach Anspruch 1, **dadurch gekennzeichnet, daß** die Pulverbeschichtung einen durchschnittlichen Teilchendurchmesser von 5 bis 500 μm und eine scheinbare Dichte von 0,4 bis 1,2 g/ml besitzt.

3. Verwendung nach Anspruch 1 oder 2, **dadurch gekennzeichnet, daß** die Pulverbeschichtung weiter 0,001 bis 5 Massenteile eines Wärmestabilisators pro 100 Massenteilen des Copolymers auf Tetrafluorethylen-Basis enthält.

4. Verwendung nach Anspruch 3, **dadurch gekennzeichnet, daß** der Wärmestabilisator ein Antioxidationsmittel auf Amin-Basis und/oder eine schwefelhaltige organische Verbindung umfaßt.

5. Verwendung nach einem der vorangehenden Ansprüche, **dadurch gekennzeichnet, daß** das Copolymer auf Tetrafluorethylen-Basis einen Schmelzindex von 5 bis 30 g/10 Minuten besitzt.

6. Korrosionsbeständige Auskleidung, erhältlich durch die Verwendung gemäß einem der Ansprüche 1 bis 5.

**Revendications**

1. Utilisation d'un revêtement en poudre contenant un copolymère à base de tétrafluoroéthylène en garnissage par rotation, dans laquelle ledit copolymère à base de tétrafluoroéthylène est un copolymère de 5 à 25 % en masse d'hexafluoropropylène, de 0,01 à 5 % en masse de perfluoro(éther vinylique) et de tétrafluoroéthylène et possède une vitesse d'écoulement à l'état fondu de 1 à 30. g/10 minutes.

2. Utilisation selon la revendication 1, dans laquelle le revêtement en poudre possède un diamètre moyen de particules de 5 à 500 μm et une densité apparente de 0,4 à 1,2 g/ml.

3. Utilisation selon la revendication 1 ou 2, dans laquelle le revêtement en poudre contient en outre 0,001 à 5 parties en masse d'un stabilisant thermique pour 100 parties en masse du copolymère à base de tétrafluoroéthylène.

4. Utilisation selon la revendication 3, dans laquelle le stabilisant thermique comprend un antioxydant à base d'amine et/ou un composé organique contenant du soufre.

5. Utilisation selon l'une quelconque des revendications précédentes, dans laquelle le copolymère à base de tétrafluoroéthylène possède une vitesse d'écoulement à l'état fondu de 5 à 30 g/10 minutes.

6. Revêtement résistant à la corrosion pouvant être obtenu par l'utilisation selon l'une quelconque des revendications 1 à 5.